# EUROPÄISCHE PATENTSCHRIFT

(11) **EP 1 905 625 B1**
(45) Veröffentlichungstag und Bekanntmachung des Hinweises auf die Patenterteilung: **13.04.2011**
(21) Anmeldenummer: 07015763.1
(22) Anmeldetag: 10.08.2007
(51) Int. Cl.: B60J 1/20

(54) **Rollo mit hinterschneidungsfreier Führungsschiene**
Roller blind with undercut-free guide rail
Store doté d'un rail de guidage sans contre-dépouille

(30) Priorität: 27.09.2006 DE 102006046069; 27.09.2006 DE 102006046065; 27.09.2006 DE 102006046064; 13.10.2006 DE 102006049065; 13.11.2006 DE 102006053680
(43) Veröffentlichungstag der Anmeldung: 02.04.2008
(73) Patentinhaber: BOS GmbH & Co. KG, 73760 Ostfildern (DE)
(72) Erfinder: Schlecht, Werner P., 71665 Vaihingen/Enz Aurich (DE)
(74) Vertreter: Rüger, Barthelt & Abel Patentanwälte

(56) Entgegenhaltungen:
- WO-A-2006/012856
- DE-A1- 10 125 066
- DE-A1-102004 046 783
- JP-A- 2001 055 046

## Beschreibung

Aus dem Stand der Technik sind beispielsweise Heckfensterrollos bekannt, die elektrisch angetrieben sind. Diese Fensterrollos nach dem Stand der Technik weisen eine unterhalb der Hutablage drehbar gelagerte Wickelwelle auf, an der mit einer Kante die Rollobahn befestigt ist. Die andere Kante ist mit einem Zugstab verbunden, der endseitig in Führungsschienen geführt ist. Die Führungsschienen verlaufen neben den seitlichen Rändern des Heckfensters, ausgehend von der Hutablage bzw. darunter, bis in die Nähe der Fensteroberkante. Um die Rollobahn vorzuspannen, sitzt in der Regel in der Wickelwelle oder daneben ein Federmotor, durch den die Wickelwelle im Aufwickelsinne der Rollobahn vorgespannt ist.

Das Abwickeln bzw. Aufspannen der Rollobahn geschieht mit Hilfe von bandförmigen Betätigungsgliedern, die in der Nutenkammer der Führungsschienen ausknicksicher geführt sind. Zum Antrieb der Betätigungsglieder ist ein gemeinsamer Getriebemotor vorgesehen, der neben der Wickelwelle ungefähr auf Höhe von deren Mitte liegt. Um den Getriebemotor mit den unteren Enden der Führungsschienen zu verbinden sind Führungsrohre vorgesehen, die an dem Getriebegehäuse des Getriebemotors enden. Mit Hilfe dieser Führungsrohre werden die Betätigungsglieder zwischen dem Antriebsmotor und den Führungsschienen ausknicksicher geführt, damit sie die Schubfunktion erbringen können.

Da aus Platzgründen der Motor verhältnismäßig dicht neben der Wickelwelle sitzt, verlaufen die Führungsrohre in der Nähe des Getriebemotors etwa parallel zu der Wickelwelle und müssen bei den Führungsschienen in einer Richtung rechtwinklig zur Wickelwelle umgelenkt werden. Wiederum aus Platzgründen ist der Krümmungsradius der Führungsrohre neben der Einmündung in die Führungsschienen vergleichsweise sehr eng. Diese Einbauverhältnisse erzwingen ein Betätigungsglied, das in allen Richtungen gleich gut biegsam ist. Die Führungsnuten hierfür müssen deswegen hinterschnitten sein um eine ausknicksichere Führung zu gewährleisten.

Die hinterschnittenen Führungsnuten erschweren die Montage des Zugstabs. Die Führungsglieder des Zugstabs können nur von den Enden der Führungsschienen her eingeführt werden.

Ferner ist die Herstellung von hinterschnittenen Führungsschienen schwierig und/oder aufwändig, insbesondere wenn diese mit Seitenverkleidungsteilen oder dem Dachhimmel einstückig sein sollen und mit diesen gemeinsam gespritzt oder in diese eingespritzt werden sollen.

Die Schwierigkeit der bekannten Anordnung wurde zuvor in Verbindung mit einem Heckscheibenrollo beschrieben. Grundsätzlich ähnliche Schwierigkeiten ergeben sich bei Dachfensterrollos, die in einer vergleichbaren Weise angetrieben werden.

Die WO 2006/012856 A1 beschreibt ein Dachfensterrollo mit einer drehbar gelagerten Wickelwelle, an der mit einer Kante eine Rollobahn befestigt ist. Die andere Kante ist mit einem Zugspriegel verbunden, der zwischen zwei Führungsschienen geführt ist. Die Anordnung ist manuell betrieben, wozu durch die Wickelwelle eine Verbindungsachse führt, auf der endseitig zwei Zahnräder sitzen. Die Verbindungsachse ist über eine Schraubenfeder mit der Wickelwelle gekuppelt. Um jedes der Zahnräder läuft ein endseits offener Zahnriemen herum. Das eine Teil dient als Arbeitstrum und erstreckt sich zwischen dem Zugstab und dem Zahnrad, während das andere Teil das Leertrum ist, das ebenfalls in der Führungsschiene in einem entsprechenden Kanal geführt ist.

Die DE 101 25 066 A1 beschreibt ein Rollo mit einer Wickelwelle und einer daran befestigten Rollobahn. Das freie Ende der Rollobahn ist mit einem Zugstab verbunden, der endseitig in Führungsschienen geführt ist. Gemäß einem Ausführungsbeispiel sind die Führungsschienen hinterschneidungsfrei. Zur Bewegung des Zugstabs läuft in dem Schlitz jeder Führungsschiene jeweils ein Stahlband, das bezüglich einer Krümmungsachse leicht gekrümmt ist. Die Krümmungsachse liegt parallel zur Längserstreckung des Stahlbands.

Ausgehend hiervon ist es Aufgabe der Erfindung ein Fensterrollo für Kraftfahrzeuge zu schaffen, bei dem die Montage vereinfacht ist.

Diese Aufgabe wird erfindungsgemäß Fensterrollo für Kraftfahrzeuge gelöst, das die Merkmale des Anspruchs 1 aufweist.

Das neue Fensterrollo für Kraftfahrzeuge weist eine drehbar gelagerte Wickelwelle mit zwei Stirnenden auf. An der Wickelwelle ist mit einer Kante die Rollobahn befestigt. Eine andere Kante der Rollobahn, die von der Wickelwelle abliegt, ist mit dem Zugstab verbunden. Zur Führung des Zugstabs sind zwei Führungsschienen vorgesehen, die beidseits der aufgespannten Rollobahn verlaufen. Jede der beiden Führungsschienen enthält eine Führungsnut, die im Unterschied zum Bekannten frei von Hinterschneidungen ist. In den Führungsschienen laufen bandförmige Betätigungsglieder, die den Zweck haben, den Zugstab zu bewegen oder Bewegungen von dem Zugstab zu übertragen. Die Betätigungglieder haben einen rechteckigen Querschnitt, dessen Dicke an die Weite der Führungsnut angepasst ist. Die Betätigungsglieder tragen auf einer Flachseite eine Verzahnung, über die sie formschlüssig antreibbar sind.

Da die Betätigungsglieder einen rechteckigen Querschnitt aufweisen, sind sie in Richtung parallel zu der Ebene der aufgespannten Rollobahn von Haus aus hinreichend knicksteif, um Druckkräfte übertragen zu können, ohne dass sie seitlich aus den hinterschneidungsfreien Führungsnuten ausknicken können. Andererseits sind sie in Richtung senkrecht dazu biegeweich, um sich ohne weiteres an die beiden Antriebszahnräder anschmiegen zu können, mit denen sie antriebsmäßig formschlüssig gekuppelt sind. Oder um an Orten verstaut werden zu können, die einen von der Geraden abweichenen Verlauf aufweisen. Mit den Betätigungsglieder kann so zumindest eine schiebende Kraftübertragung zwischen den Antriebsrädern und dem Zugstab erfolgen.

Die Betätigung des Fensterrollos kann manuell erfolgen, wobei eine Anordnung verwendet werden kann, wie sie in der DE 10 2006 046 065 und die DE 10 2006 046 064 ausführlich beschrieben ist.

Bei einem elektrisch betätigten Fensterrollo ist eine elektrische Antriebseinrichtung vorgesehen, die beispielsweise mit der Wickelwelle verbunden sein kann. Eine andere Möglichkeit besteht darin die Antriebszahnräder mit der elektrischen Antriebseinrichtung zu kuppeln.

Elektrische Antriebseinrichtungen für ein derartiges Rollo sind in der DE 10 2006 046 069 ausführlich erläutert.

Die neue Anordnung lässt sich auch für solche Fensterrollos verwenden, bei denen die Seitenkanten der Rollobahn nicht parallel zueinander verlaufen. Hierzu wird ein Zugstab benötigt der längenveränderlich ist.

Günstige Führungsverhältnisse können werden erreicht, wenn die Führungsschienen einends in der Nähe der Wickelwelle beginnen.

Die Führungsschienen können, je nach Gestalt des Fensters, parallel oder konvergierend zueinander angeordnet sein.

Zweckmäßigerweise ist das bandförmige Betätigungsglied flach rechteckig in der Weise, dass die Abmessungen in Dickenrichtungen um den Faktor 2 oder mehr kleiner sein können als in Breitenrichtungen des Querschnittsprofils.

Das Antriebszahnrad kann ein geradverzahntes Zahnrad sein, wenn die Führungsschienen im rechten Winkel zur Drehachse des Antriebszahnrads verlaufen. Wenn die Führungsschienen im Winkel zu der Drehachse liegen, ist das Antriebszahnrad mit einer Schrägverzahnung versehen derart, dass die Zahnkopflinie des Zahns rechtwinklig zu der Längsachse der Führungsschiene liegt.

Die Antriebszahnräder können koaxial zu der Wickelwelle angeordnet sein und der Antriebsmotor kann mit der Wickelwelle gekuppelt sein.

Zwischen den Antriebszahnrädern und der Wickelwelle können federelastische Ausgleichsmittel eingefügt sein. Die Ausgleichsmittel sind im einfachsten Falle Schrauben- oder Spiralfedern.

Die Verhältnisse sind sehr platzsparend, wenn die Spiralfeder in einer Ausnehmung des Antriebszahnrads sitzt.

Um das Leertrum jedes Betätigungsglieds verschmutzungs- und beschädigungssicher im Fahrzeug zu verstauen, ist für jedes Betätigungsglied ein Speicherrohr vorhanden. Das Speicherrohr kann zweckmäßigerweise aus einem flexiblen Material bestehen. Es kann rund sein.

Im Übrigen sind Weiterbildungen der Erfindung Gegenstand von Unteransprüchen.

Die nachfolgende Figurenbeschreibung beschränkt sich auf die Erläuterung der für das Verständnis wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenenfalls vorhandene Detail.

In der Zeichnung sind Ausführungsbeispiele des Gegenstandes der Erfindung dargestellt.
- Fig. 1: zeigt eine aufgebrochene Fondpartie eines PKW's in einer perspektivischen Darstellung;
- Fig. 2: zeigt den prinzipiellen Aufbau des Heckfens- terrollos des Fahrzeugs nach Fig. 1;
- Fig. 3: zeigt einen Querschnitt durch eine der Füh- rungsschienen zusammen mit einem Abschnitt eines der Führungsglieder, in einer perspek- tivischen Darstellung; und

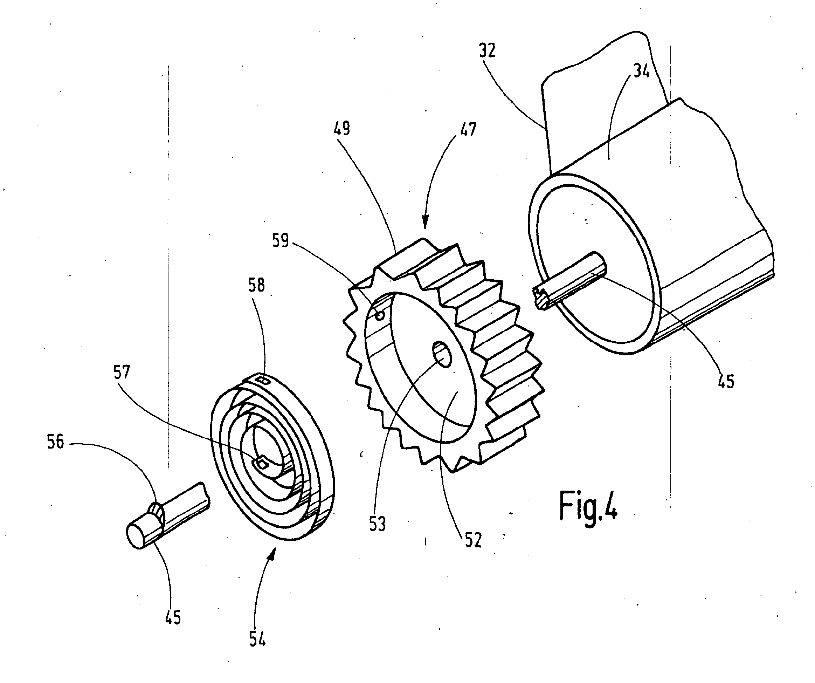

- Fig. 4: veranschaulicht die Verbindung zwischen ei- nem der Antriebszahnräder und der Wickelwel- le an Hand einer vereinfachten perspektivi- schen Eplosionsdarstellung.

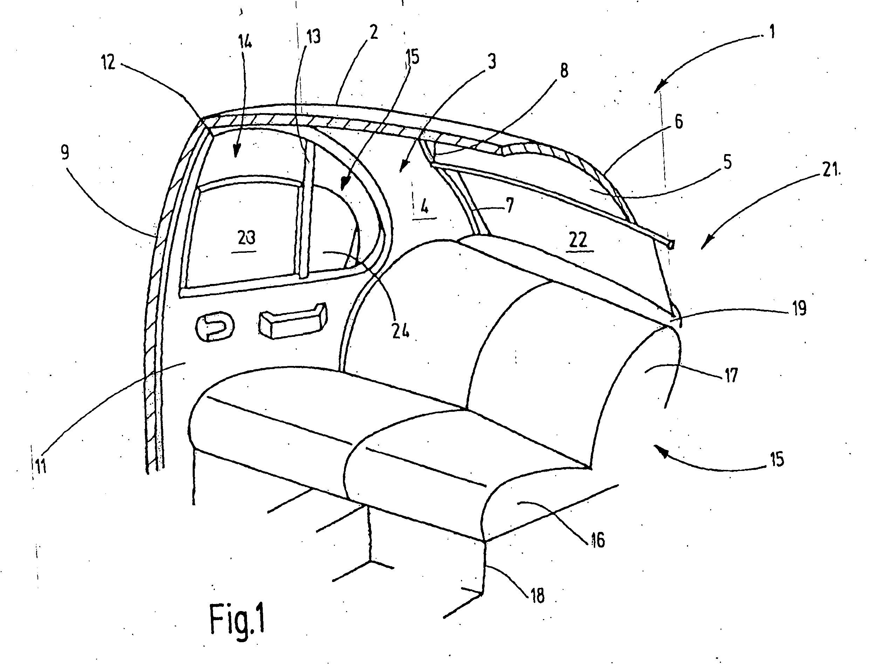

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, wie Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 23 und in dem dreieckigen Abschnitt 15 eine Rollbahn 24.

Die Antriebsart der Rollobahnen 23 und 24 entspricht der Antriebsart des Heckscheibenrollos 21, weshalb es genügt, lediglich dessen Aufbau im Einzelnen zu erläutern.

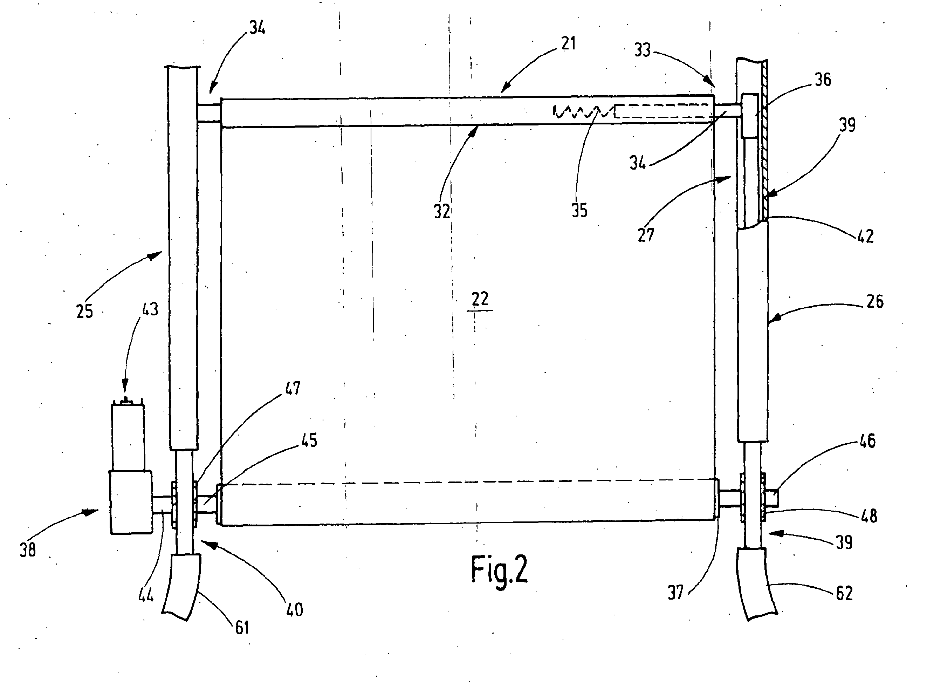

Gemäß Fig. 2 gehören zu dem Heckscheibenrollo 21 zwei seitlich des Heckfensters 5 verlaufende Führungsschienen 25 und 26.

Die Führungsschienen 25 und 26 sind spiegelbildlich zueinander angeordnet und folgen dem Verlauf der Seitenkante des Heckfensters 5. Abweichend von der Darstellung in Fig. 2 können sie mehr oder weniger stark in Richtung auf das Dach 2 konvergieren.

Da die beiden Führungsschienen 25 und 26 untereinander gleich sind, genügt die Erläuterung der inneren Struktur der Führungsschiene 26. Die Erläuterung gilt sinngemäß für die Führungsschiene 25.

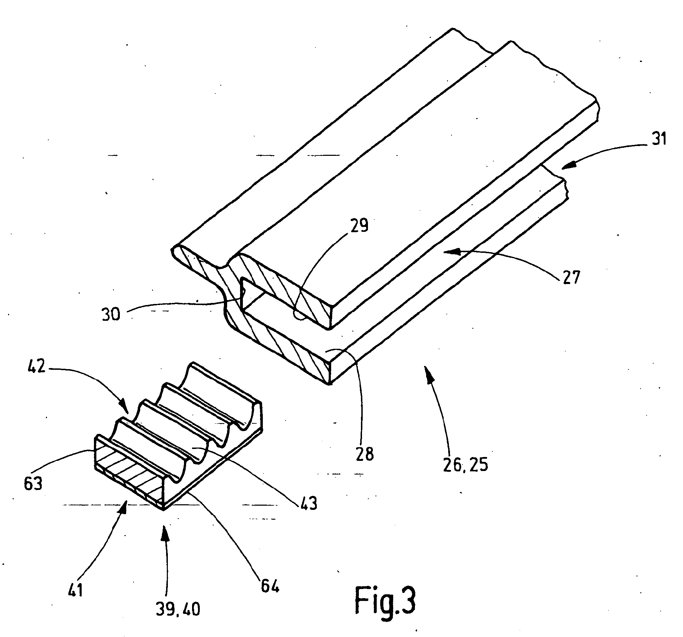

Gemäß Fig. 3 befindet sich in der Führungsschiene 26 befindet sich eine hinterschneidungsfreie Führungsnut 27, deren Profil einfach flach rechteckig ist. Die Führungsnut 27 wird von zwei zueinander parallelen Seitenwänden 28, 29 sowie einem Nutenboden 30 begrenzt und öffnet sich durch eine Schlitz 31 nach außen.

Die beiden Führungsschienen 25 und 26 dienen dazu, einen Zugstab 32 zu führen, an dem mit einer Kante die Rollobahn 22 befestigt ist. Der Zugstab 32 setzt sich aus einem Mittelstück zusammen, in dem zwei Endstücke 33 und 34 teleskopartig geführt sind. Das Mittelstück sitzt beispielsweise in einer an der Rollobahn 22 ausgebildeten schlauchförmigen Schlaufe. Die beiden Endstücke 33, 34 sind durch Federn 35 elastisch nach außen in Richtung auf die Führungsschiene 25, 26 vorgespannt.

Jedes der beiden Endstücke 33, 34 trägt an seinem freien Ende ein Gleitstück 36 sitzt. Die Endstücke 33, 34 sind im Querschnitt so bemessen, dass sie mit Spiel in die Führungsnut 27 passen. Der Querschnitt des Gleitstücks 36 ist an den Querschnitt der Führungsnut 27 angepasst, die beispielsweise flach rechteckig ist.

Das von dem Zugstab 32 abliegende Ende der Rollobahn 22 ist an einer Wickelwelle 37 befestigt.

Eine Antriebseinrichtung 38 dient dazu, die Rollobahn 22 zwischen der ausgezogenen Stellung, in der sie vor dem Heckfenster 5 ausgebreitet ist, in eine zurückgezogene Stellung zu überführen, in der der Zugstab 32 entweder auf der Hutablage 19 aufliegt oder durch den dort vorhandenen Schlitz zurückgezogen ist.

Zu der Antriebseinrichtung 38 gehören zwei bandförmige biegeelastische Betätigungsglieder 39 und 40, die ebenfalls gleich ausgebildet sind. Jedes der Betätigungsglieder 39, 40 weist einen flach rechteckigen Querschnitt auf, mit den beiden Flachseiten 41 und 42. Die Flachseite 42 trägt eine Verzahnung 43. Es entsteht hierdurch einseitig verzahnte biegeelastische Zahnstange. Die Dicke der Zahnstangen 39, 40 entspricht der lichten Weite der Führungsnut 27. Hierdurch sind die beiden Betätigungsglieder 39, 40 in ihren zugehörigen Führungsschienen 25 und 26 in Richtung senkrecht zu der Ebene ihrer Flachseiten 41, 42 ausknicksicher geführt. Da sie in Richtung senkrecht dazu ein besseres Flächenträgheitsmoment aufweisen, können sie Betätigungskräfte auf den Zugstab 32 übertragen. Auf Grund ihrer Gestalt können sie auch bei Druckbelastung nicht seitlich durch den Schlitz 31 ausknicken. Zur besseren Führung können die Betätigungsglieder 39, 40 endseitig mit dem zugehörigen Gleitstück 36 verbunden sein.

Zu der Antriebseinrichtung 38 gehört ferner ein Getriebemotor 43, dessen Ausgangswelle 44 starr mit de Achszapfen 45 der Wickelwelle 36 verbunden ist.

Auf den beiden Achszapfen 45 und 46 sitzt jeweils ein Stirnzahnrad 47 bzw. 48, das auf der Außenumfangsfläche mit einer Verzahnung 49 versehen ist, die einen formschlüssigen Eingriff mit dem betreffenden zugehörigen Betätigungsglied 39, 40 gestattet. Durch nicht weiter veranschaulichten Mittel werden die beiden Betätigungsglieder 39, 40 in radialer Richtung gegen das zugehörige Antriebszahnrad 47, 48 angedrückt, damit stets der Eingriff bestehen bleibt. Die Betätigungsglieder 39, 40 liegen auf derselben Seite bezogen auf die Drehachse auf dem zugehörigen Antriebszahnrad 47, 48 auf, auf der auch die Rollobahn 22 von der Wickelwelle 37 abläuft.

Das Zahnrad 47 ist auf dem Achszapfen 45 drehbar gelagert. Sinngemäß das Gleiche gilt für das Zahnrad 48 auf dem Achszapfen 46. Die kinematische Verbindung, über die ein Antriebsmoment übertragen wird, ist in Fig. 3 im Einzelnen veranschaulicht. Die dort gegebene Beschreibung gilt sinngemäß für beide Antriebszahnräder 47 und 48.

Das Antriebszahnrad 47 hat eine scheibenförmige Gestalt mit der geraden Stirnverzahnung 49, die formschlüssig mit der Verzahnung 43 des jeweiligen Betätigungsglieds 39, 40 zusammenwirkt.

Koaxial zu der Verzahnung 49 enthält das Zahnrad 47 eine topfförmige Ausdrehung 52, in der konzentrisch eine Lagerbohrung 53 enthalten ist, mit der das Zahnrad 47 auf dem Achszapfen 45 drehbar gelagert ist. Die Ausdrehungen 52 bildet ein Federgehäuse für eine Spiralfeder 54, die eine drehelastische Verbindung zwischen dem Achszapfen 45 und dem Zahnrad 47 herstellt. Hierzu ist der Achszapfen 45 an der entsprechenden Stelle mit einer aufgestülpten Nase 56 versehen, die als Wiederlager für eine an dem inneren Federende vorgesehene Öffnung 57 dient. Das außenliegende Federende enthält ebenfalls eine Öffnung 58, die formschlüssig mit einer Nase 59 verbindbar ist, die von der Außenumfangsfläche der Ausdrehung 52 radial nach innen zeigt.

Wie sich aus der späteren Funktionsbeschreibung ergibt, vollführt bei entsprechender Dimensionierung des effektiven Durchmessers des Zahnrads 47, bezogen auf den Ballen, den die aufgewickelte Rollobahn 22 auf der Wickelwelle 37 bildet, eine Relativdrehung gegenüber der Wickelwelle 37. Das Maß dieser Relativdrehung beträgt ca. maximal eine Umdrehung. Dadurch kann eine Spiralfeder 54 verwendet werden, die einen verhältnismäßig kurzen Wirkweg hat.

Die Darstellung in den Figuren ist nicht maßstäblich. Vielmehr geht es hier darum, das Wesentliche des Antriebskonzepts zu erläutern. Die einschlägigen Werte für die Bemessung der Führungsschienen 25 und 26 sowie der daraus resultierenden Außendurchmesser der beiden elastische biegsamen Betätigungsglieder 39, 40 sind aus der Praxis bekannt.

Der Vollständigkeit halber sei noch erwähnt, dass aus der Sicht der jeweiligen Führungsschiene 25, 26 auf der gegenüberliegenden Seite des betreffenden Zahnrads 47, 48 sich ein biegeelastisches Speicherrohr 61 bzw. 62 befindet, das entsprechend der räumlichen Verhältnisse weitgehend frei im Fahrzeug verlegt wird.

Die Maßnahmen, die getroffen sind, um die Speicherrohre 61 und 62 ortsfest zu halten, sind, da sie für das Verständnis der Erfindung nicht von Bedeutung sind, nicht dargestellt. Ebenso fehlt beispielsweise ein eventuell vorhandenes Gehäuse, das das Zahnrad 47 bzw. 48 umgibt und das zum Durchtritt des zugehörigen biegeelastischen Betätigungsglieds 38, 39 eine entsprechende Tangentialbohrung enthält.

Die Wirkungsweise der gezeigten Anordnung ist wie folgt:

Es wird hierbei davon ausgegangen, dass zunächst die Rollobahn 22 vollständig, d.h. so weit wie möglich, auf der Wickelwelle 37 aufgewickelt ist. In dem aufgewickelten Zustand sind die in den beiden Zahnrädern 47, 48 enthaltenen Spiralfedern 54 geringfügig vorgespannt. Aufgrund der Vorspannung werden die damit in Eingriff stehenden und somit formschlüssig gekuppelten Betätigungsglieder 39 und 40 elastisch in Richtung auf die beiden Gleitstücke 35 des Zugstabs 32 vorgespannt und liegen dort an. Die Vorspannkraft der Spiralfedern 54 hält die Rollobahn 22 zwischen der Wickelwelle 36 und dem Zugstab 32 gestrafft. Die Federn 35 drücken die Gleitstücke 36 und die damit gekuppelten Enden der bandförmigen Betätigungsglieder 39, 40 gegen den Nutenboden 30.

Wenn der Benutzer, ausgehend von dieser Position, das Heckfensterrollo 21 ausfahren will, setzt er über einen elektrischen Schalter den Getriebemotor 43 in Gang. Der laufende Getriebemotor 43 dreht die Wickelwelle 37 zusammen mit den beiden damit drehfest gekoppelten Achszapfen 45 und 46 in Richtung des Abwickelns der Rollobahn 22 von der Wickelwelle 37.

In der gleichen Drehrichtung bewegen sich die beiden Antriebszahnräder 47 und 48. Da ihr effektiver Durchmesser mit dem Außendurchmesser des Ballens auf der Wickelwelle 37 übereinstimmt, wenn die Rollobahn 22 entsprechend dem geöffneten Rollo vollständig aufgewickelt ist, bewegen sich zunächst die beiden Betätigungsglieder 39 und 40 mit exakt derselben Geschwindigkeit, wie der Zugstab 32, d.h. die bewegliche Vorderkante der Rollobahn 22.

Mit fortschreitendem Abwickeln der Rollobahn 22 vermindert sich der auf der Wickelwelle vorhandene Ballen. Pro Umdrehung der Wickelwelle 37 wird folglich weniger Rollobahn freigegeben, als bei starrer Kupplung bei gleicher Winkeldrehung die beiden biegeelastischen jedoch schubsteifen Betätigungsglieder 39, 40 zurücklegen würden.

Wegen der starren Kupplung mit der Rollobahn 22 sind sie gezwungen mit derselben Geschwindigkeit zu laufen, wie die Rollobahn 22, was in der Konsequenz dazu führt, dass die Drehbewegung der beiden Antriebszahnräder 47 und 48 gegenüber der Drehbewegung der Wickelwelle 37 retardiert ist. Hierdurch wird die Spiralfeder 54, ähnlich einer Uhrfeder, stärker aufgezogen.

Je nach Dimensionierug und Länge des Ausfahrhubs beschränkt sich jedoch das Maß der Relativdrehung auf ca. eine Umdrehung zwischen der Wickelwelle 37 und dem Antriebszahnrad 47 bzw. 48.

Am Schluss der Ausfahrbewegung, wenn der Zugstab 21 an der Fensteroberkante angekommen ist, wird folglich die Tuchspannung in der Rollobahn 22 etwas größer sein als zu Beginn.

Das Einfahren der Rollobahn geschieht sinngemäß in der umgekehrten Richtung, wobei sich die beiden Spiralfedern 54 wieder um das entsprechende Maß entspannen. Am Schluss der Einfahrbewegung liegt der Zugstab 31 wieder auf der Hutablage 19 auf, wobei die verbleibende Restspannung in den beiden Spiralfedern 54 für die erforderliche Tuchspannung in der Rollobahn 22 sorgt. Da die Spiralfedern 54 an beiden Seiten gleich dimensioniert sind, wirken auch an beiden Enden dieselben Kräfte auf den Zugstab 31.

Da die Antriebswirkung unmittelbar am Fußende der beiden Führungsschienen 25 und 26 eingeleitet wird, sind keine komplizierten Umlenkungen erforderlich, um die beiden Betätigungsglieder 39, 40 zu einer gemeinsamen Antriebsquelle zu bringen. Jedes Betätigungsglied 39, 40 verfügt über seine eigene Antriebsquelle, die so platziert ist, dass eine minimale Auslenkung des Betätigungsglieds 39, 40 ausgehend von der vollkommen gestreckten geraden Verlauf, erforderlich ist. Hierdurch vermindert sich die Reibung, verglichen mit den Lösungen nach dem Stand der Technik enorm. Auch die Speicherrohre 61 und 62 verlaufen weitgehend gerade und, da sie flexibel sind, können sie beliebig im Fahrzeug verlegt werden.

Wie die gezeigte Anordnung ferner erkennen lässt, werden die beiden Betätigungsglieder 39 und 40 im Bereich des Arbeitstrums, d.h. zwischen dem Zugstab 32 und dem jeweiligen Antriebszahnrad 47, 48 auf Druck belastet, was auch bei manuellem Betrieb über den Zugstab gilt. Diese Druckbelastung kann zwar möglicherweise auf die volle Länge des Arbeitstrums dazu führen, dass das jeweilige Betätigungsglied 39, 40 bestrebt ist, senkrecht zu den Seitenwänden 28, 29 der Führungsnut 27 auszuknicken. An einem Ausknicken wird das jeweilige Betätigungsglied 39, 40 jedoch durch diese beiden starren Seitenwänden 28, 29 gehindert.

Die spezielle Gestalt des flachen, bandförmigen Betätigungsglieds 38, 40 reicht jedoch aus, um auch auf die gesamte Länge des Arbeitstrums ein seitliches Ausknicken selbstständig, ohne Zuhilfenahme der Führungsschienen 25, 26, zu verhindern.

Damit werden hinterschnittene Führungsnuten, wie sie aus dem Stand der Technik bekannt sind, entbehrlich. Hinterschneidungsfreie Führungsnuten haben den großen Vorteil, dass es ohne besondere Schwierigkeiten möglich ist, solche Führungsnuten, beispielsweise auch in Seitenverkleidungsteile des Kraftfahrzeugs mit einzuspritzen. Unter Seitenverkleidungsteile sollen hier auch Abschnitte des Dachhimmels verstanden sein.

Die Vereinfachung ergibt sich, weil hinterschneidungsfreie Teile ohne weiteres auf einem sonst nicht geraden Verlauf leicht zu entformen sind.

Eine weitere Verbesserung der Knickfestigkeit in Richtung parallel zur Ebene der aufgespannten Rollobahn 22 ergibt sich, wenn das jeweilige Betätigungsglied 38, 40 sandwichartig aufgebaut ist. Beispielsweise besteht es, wie Fig. 3 zeigt, aus einer die Verzahnung 43 tragenden elastomeren Schicht und einem die Rückseite bildende Federstahlband 64. Das Federstahlband kann sehr dünn sein, so dass es beispielsweise auch ohne weiteres möglich ist, einen leicht geschraubten Verlauf zu realisieren. Es ist in Querrichtung eben, d.h die Erzeugende ist eine Gerade.

Wenn die beiden Führungsschienen 25 und 26 nicht, wie in Fig. 2 gezeigt parallel, sondern unter einem Winkel zueinander verlaufen, genügt es, wenn die Verzahnung auf den beiden Zahnrädern 47, 48 etwas schräg verläuft derart, dass die Achse der Führungsschiene 25, 26 senkrecht auf der Zahnkopflinie steht desjenigen Zahns, der mit dem jeweiligen Betätigungsglied 39, 40 in Eingriff steht.

Die von den Zahnrädern 47, 48 abliegenden Enden des Arbeitstrums jedes Betätigungsglieds 39, 40 werden zwangsläufig durch die federvorgespannten Endstücke 33, 34 in der Führungsnut 27 gehalten.

Die Erfindung wurde exemplarisch anhand eines Heckscheibenrollos erläutert. Es ist jedoch ohne weiteres zu erkennen, dass die Erfindung in Gestalt der flachen Betätigungsglieder in Verbindung mit hinterschneidungsfreien Führungsnuten auch auf Seitenfensterrollos und Dachfensterrollos anwendbar ist.

Ein Fensterrollo für Kraftfahrzeuge weist seitlich der aufgespannten Rollobahn Führungsschienen auf. Diese Führungsschienen enthalten hinterschneidungsfreie Führungsnuten. Zum Übertragen der Kräfte zwischen dem Zugstab und der Antriebseinrichtung werden bandförmige Betätigungsglieder verwendet. Diese werden durch die Führungsschienen an einem Ausknicken senkrecht zu der Rollobahnebene gehindert. Am Ausknicken in Richtung parallel zur Rollobahnebene werden sie inhärent, d.h. ohne von außen kommende Hilfe durch ihre Gestalt gehindert.

## Patentansprüche

1. Fensterrollo (21) für Kraftfahrzeuge,
mit einer drehbar gelagerten Wickelwelle (37), die zwei Stirnenden aufweist
mit einer Rollobahn (22), die mit einer Kante an der Wickelwelle (37) befestigt ist,
mit einem Zugstab (32), der an einer von der Wickelwelle (37) abliegenden Kante mit der Rollobahn (22) verbunden ist,
mit zwei Führungsschienen (25,26), die beidseits der aufgespannten Rollobahn (22) verlaufen,
mit zwei bandförmigen Druckkräfte übertragenden Betätigungsgliedern (39,40), von denen das eine der einen Führungsschiene (25,26) und das andere der anderen Führungsschiene (25,26) zugeordnet ist, die durch die Führungsschienen (25,26) geführt sind, die beide einen rechteckigen Querschnitt aufweisen, dessen Dicke der Weite der Führungsnut (27) entspricht, von den beide eine Verzahnung (42) tragen und die beide mit dem Zugstab (32) zusammenwirken,
mit zwei Antriebszahnräder (47,48), von denen das eine dem einen Betätigungsglieder (39,40) und das andere dem anderen Betätigungsglied (39,40) zugeordnet ist und die bei den Stirnenden der Wickelwelle (37) angeordnet sind,
wobei die Betätigungsglieder (39,40) kinematisch zwischen den Antriebsrädern (47,48) und dem Zugstab (32) liegen, **dadurch gekennzeichnet, dass** jede der Führungsschienen zur Führung des Zugstabs (32) eine hinterschneidungsfreie Führungsnut (27) enthält, wobei der Zugstab sich aus einem Mittelstück und zwei Endstücken (33,34) zusammensetzt, die durch Federn (35) elastisch nach außen in Richtung auf die jeweilige Führungsschiene (25,26) vorgespannt sind.

2. Fensterrollo nach Anspruch 1, **dadurch gekennzeichnet, dass** eine Antriebseinrichtung (38) zumindest für die Wickelwelle vorhanden ist.

3. Fensterrollo nach Anspruch 2, **dadurch gekennzeichnet, dass** eine Antriebseinrichtung (38) zumindest für die Antriebszahnräder (47,48) vorhanden ist.

4. Fensterrollo nach Anspruch 1, **dadurch gekennzeichnet, dass** der Zugstab (32) längenveränderlich ist.

5. Fensterrollo nach Anspruch 1, **dadurch gekennzeichnet, dass** die Führungsschienen (25,26) einends in der Nähe der Wickelwelle (37) beginnen,

6. Fensterrollo nach Anspruch 1, **dadurch gekennzeichnet, dass** die Führungsschienen (25,26) parallel oder konvergierend zueinander verlaufen.

7. Fensterrollo nach Anspruch 6, **dadurch gekennzeichnet, dass** in der Führungsnut (27) das jeweilige Betätigungsglied (39,40) in Richtung senkrecht zu der aufgespannten Rollobahn ausknicksicher geführt ist.

8. Fensterrollo nach Anspruch 1, **dadurch gekennzeichnet, dass** das Betätigungsglied (39,40) im Querschnitt flach-rechteckig ist, wobei eine Flachseite die Verzahnung (42) trägt.

9. Fensterrollo nach Anspruch 1, **dadurch gekennzeichnet, dass** das Betätigungsglied (39,40) einen Sandwichaufbau aufweist mit einem aus Federstahlband bestehenden Rücken (41).

10. Fensterrollo nach Anspruch 1, **dadurch gekennzeichnet, dass** das Antriebszahnrad (47,48) ein Stirnzahnrad ist.

11. Fensterrollo nach Anspruch 1, **dadurch gekennzeichnet, dass** das Antriebszahnrad (47,48) eine Schrägverzahnung aufweist, derart, dass die Längsrichtung eines Zahn, der mit dem Betätigungsglied (39,40) in Eingriff steht, rechtwinkelig zu der Längsachse der Führungsschiene (25,26) verläuft.

12. Fensterrollo nach Anspruch 1, **dadurch gekennzeichnet, dass** die beiden Antriebszahnräder (47,48) mit der Wickelwelle (37) verbunden sind.

13. Fensterrollo nach Anspruch 1, **dadurch gekennzeichnet, dass** die beiden Antriebszahnräder (47,48) koaxial zu der Wickelwelle (37) angeordnet sind.

14. Fensterrollo nach Anspruch 1, **dadurch gekennzeichnet, dass** der Antriebsmotor (43) mit der Wickelwelle (37) gekuppelt ist.

15. Fensterrollo nach Anspruch 1, **dadurch gekennzeichnet, dass** Ausgleichsmittel (54) zwischen den Antriebszahnrädern und der Wickelwelle (37) angeordnet sind.

16. Fensterrollo nach Anspruch 15, **dadurch gekennzeichnet, dass** die Ausgleichsmittel von einer Spiralfeder (54) gebildet sind.

17. Fensterrollo nach Anspruch 16, **dadurch gekennzeichnet, dass** die Spiralfeder (54) in einer Ausnehmung des Antriebszahnrads (47,48) sitzt.

18. Fensterrollo nach Anspruch 1, **dadurch gekennzeichnet, dass** Mittel vorgesehen sind, die dazu eingerichtet sind, das jeweilige Betätigungsglied (39,40) mit seinem zugehörigen Antriebszahnrad (47,48) in Eingriff zu halten.

19. Fensterrollo nach Anspruch 1, **dadurch gekennzeichnet, dass** für jedes Antriebszahnrad (47,48) ein eigenes Getriebegehäuse vorgesehen ist.

20. Fensterrollo nach Anspruch 1, **dadurch gekennzeichnet, dass** für jedes Betätigungsglied (39,40) ein eigenes Speicherrohr (61,62) vorhanden ist, das bei eingefahrenem Fensterrollo das Leertrum des Betätigungsglieds (39,40) aufnimmt.

21. Fensterrollo nach Anspruch 20, **dadurch gekennzeichnet, dass** das Speicherrohr (61,62) aus einem flexiblen Material besteht.

## Claims

1. Window roller blind (21) for motor vehicles,
with a rotatably mounted winding shaft (37) having two face ends,
with a blind sheet (22), which is fastened to the winding shaft (37) with one edge,
with a pull rod (32), which is connected to the blind sheet (22) at an edge remote from the winding shaft (37),
with two guide rails (25, 26), which run on both sides of the opened blind sheet (22),
with two band-type operating members (39, 40) transferring pressure forces, of which one member is associated with one guide rail (25, 26) and the other member is associated with the other guide rail (25, 26), said members being guided by the guide rails (25, 26), which both have a rectangular cross-section, the thickness of which corresponds to the width of the guide groove (27), which both bear a tooth system (42) and which both cooperate with the pull rod (32),
with two drive gear wheels (47, 48), of which one gear wheel is associated with one operating member (39, 40) and the other gear wheel is associated with the other operating member (39, 40), and which are arranged at the face ends of the winding shaft (37),
wherein the operating members (39, 40) lie kinematically between the drive wheels (47, 48) and the pull rod (32), **characterised in that** each of the guide rails contains an undercut-free guide groove (27) to guide the pull rod (32), wherein the pull rod is composed of a central piece and two end pieces (33, 34), which are biased elastically outwards in the direction of the respective guide rail (25, 26) by means of springs (35).

2. Window roller blind according to claim 1, **characterised in that** a drive means (38) is provided at least for the winding shaft.

3. Window roller blind according to claim 2, **characterised in that** a drive means (38) is provided at least for the drive gear wheels (47, 48).

4. Window roller blind according to claim 1, **characterised in that** the pull rod (32) is variable in length.

5. Window roller blind according to claim 1, **characterised in that** the guide rails (25, 26) begin at one end in the vicinity of the winding shaft (37).

6. Window roller blind according to claim 1, **characterised in that** the guide rails (25, 26) run parallel to one another or converge towards one another.

7. Window roller blind according to claim 6, **characterised in that** the respective operating member (39, 40) is guided in the guide groove (27) in a direction perpendicular to the opened blind sheet to be secure against buckling.

8. Window roller blind according to claim 1, **characterised in that** the operating member (39, 40) has a flat rectangular shape in cross-section, wherein one flat side bears the tooth system (42).

9. Window roller blind according to claim 1, **characterised in that** the operating member (39, 40) has a sandwich-type structure with a back (41) made from spring steel band.

10. Window roller blind according to claim 1, **characterised in that** the drive gear wheel (47, 48) is a spur gear wheel.

11. Window roller blind according to claim 1, **characterised in that** the drive gear wheel (47, 48) has a helical tooth system such that the longitudinal direction of one tooth, which stands in engagement with the operating member (39, 40), runs at right angles to the longitudinal axis of the guide rail (25, 26).

12. Window roller blind according to claim 1, **characterised in that** the two drive gear wheels (47, 48) are connected to the winding shaft (37).

13. Window roller blind according to claim 1, **characterised in that** the two drive gear wheels (47, 48) are arranged coaxially to the winding shaft (37).

14. Window roller blind according to claim 1, **characterised in that** the drive motor (43) is coupled to the winding shaft (37).

15. Window roller blind according to claim 1, **characterised in that** equalising means (54) are arranged between the drive gear wheels and the winding shaft (37).

16. Window roller blind according to claim 15, **characterised in that** the equalising means are formed by a spiral spring (54).

17. Window roller blind according to claim 16, **characterised in that** the spiral spring (54) sits in a recess of the drive gear wheel (47, 48).

18. Window roller blind according to claim 1, **characterised in that** means are provided, which are fitted to hold the respective operating member (39, 40) in engagement with its associated drive gear wheel (47, 48).

19. Window roller blind according to claim 1, **characterised in that** each drive gear wheel (47, 48) is provided with its own gearbox.

20. Window roller blind according to claim 1, **characterised in that** each operating member (39, 40) is provided with its own storage tube (61, 62), which receives the slack of the operating member (39, 40) when the window roller blind is retracted.

21. Window roller blind according to claim 20, **characterised in that** the storage tube (61, 62) is made from a flexible material.

## Revendications

1. Store à enrouleur pour vitre (21) destiné à des véhicules automobiles,
comprenant un axe d'enroulement (37) qui est monté tournant et présente deux extrémités frontales,
comprenant une bande de store (22) qui est fixée par un bord à l'axe d'enroulement (37),
comprenant une barre de traction (32) qui est reliée à la bande de store (22), sur un bord éloigné de l'axe d'enroulement (37),
comprenant deux rails de guidage (25, 26) qui s'étendent de part et d'autre de la bande de store (22) déroulée,
comprenant deux éléments d'actionnement (39, 40) en forme de bandes, qui transmettent des forces de poussée et dont l'un est associé à un rail de guidage (25, 26) et l'autre est associé à l'autre rail de guidage (25, 26) et qui sont guidés par les rails de guidage (25, 26) et présentent tous deux une section rectangulaire dont l'épaisseur correspond à la largeur de la rainure de guidage (27), et qui portent tous deux une denture (42) et coopèrent tous deux avec la barre de traction (32),
comprenant deux roues dentées d'entraînement (47, 48), dont l'une est associée à un élément d'actionnement (39, 40) et l'autre est associée à l'autre élément d'actionnement (39, 40), et qui sont disposées près des extrémités frontales de l'axe d'enroulement (37),
les éléments d'actionnement (39, 40) se situant du point de vue cinématique entre les roues d'entraînement (47, 48) et la barre de traction (32), **caractérisé par le fait que** chacun des rails de guidage comporte une rainure de guidage (27) sans contre-dépouille pour guider la barre de traction (32), ladite barre de traction se composant d'une pièce centrale et de deux pièces d'extrémité (33, 34) qui sont précontraintes par des ressorts (35) de façon élastique vers l'extérieur, en direction du rail de guidage (25, 26) respectif.

2. Store à enrouleur pour vitre selon la revendication 1, **caractérisé par le fait qu'**un dispositif d'entraînement (38) est prévu au moins pour l'axe d'enroulement.

3. Store à enrouleur pour vitre selon la revendication 2, **caractérisé par le fait qu'**un dispositif d'entraînement (38) est prévu au moins pour les roues dentées d'entraînement (47, 48).

4. Store à enrouleur pour vitre selon la revendication 1, **caractérisé par le fait que** la longueur de la barre de traction (32) est modifiable.

5. Store à enrouleur pour vitre selon la revendication 1, **caractérisé par le fait que** les rails de guidage (25, 26) commencent avec une extrémité dans le voisinage de l'axe d'enroulement (37).

6. Store à enrouleur pour vitre selon la revendication 1, **caractérisé par le fait que** les rails de guidage (25, 26) sont parallèles ou convergent l'un vers l'autre.

7. Store à enrouleur pour vitre selon la revendication 6, **caractérisé par le fait que** dans la rainure de guidage (27), l'élément d'actionnement (39, 40) respectif est guidé en étant protégé contre le flambage, dans la direction perpendiculaire à la bande de store déroulée.

8. Store à enrouleur pour vitre selon la revendication 1, **caractérisé par le fait que** l'élément d'actionnement (39, 40) a une section plate rectangulaire, un côté plat portant la denture (42).

9. Store à enrouleur pour vitre selon la revendication 1, **caractérisé par le fait que** l'élément d'actionnement (39, 40) présente une structure sandwich avec un dos (41) formé d'une bande d'acier à ressorts.

10. Store à enrouleur pour vitre selon la revendication 1, **caractérisé par le fait que** la roue dentée d'entraînement (47, 48) est une roue dentée droite.

11. Store à enrouleur pour vitre selon la revendication 1, **caractérisé par le fait que** la roue dentée d'entraînement (47, 48) présente une denture oblique telle que la direction longitudinale d'une dent qui est en prise avec l'élément d'actionnement (39, 40) soit perpendiculaire à l'axe longitudinal du rail de guidage (25, 26).

12. Store à enrouleur pour vitre selon la revendication 1, **caractérisé par le fait que** les deux roues dentées d'entraînement (47, 48) sont reliées à l'axe d'enroulement (37).

13. Store à enrouleur pour vitre selon la revendication 1, **caractérisé par le fait que** les deux roues dentées d'entraînement (47, 48) sont disposées de façon coaxiale avec l'axe d'enroulement (37).

14. Store à enrouleur pour vitre selon la revendication 1, **caractérisé par le fait que** le moteur d'entraînement (43) est accouplé à l'axe d'enroulement (37).

15. Store à enrouleur pour vitre selon la revendication 1, **caractérisé par le fait que** des moyens compensateurs (54) sont disposés entre les roues dentées d'entraînement et l'axe d'enroulement (37).

16. Store à enrouleur pour vitre selon la revendication 15, **caractérisé par le fait que** les moyens compensateurs sont constitués d'un ressort spiral (54).

17. Store à enrouleur pour vitre selon la revendication 16, **caractérisé par le fait que** le ressort spiral (54) est monté dans un évidement de la roue dentée d'entraînement (47, 48).

18. Store à enrouleur pour vitre selon la revendication 1, **caractérisé par le fait qu'**il est prévu des moyens qui sont conçus pour maintenir l'élément d'actionnement (39, 40) respectif en prise avec sa roue dentée d'entraînement (47, 48) associée.

19. Store à enrouleur pour vitre selon la revendication 1, **caractérisé par le fait qu'**un carter d'engrenage séparé est prévu pour chaque roue dentée d'entraînement (47, 48).

20. Store à enrouleur pour vitre selon la revendication 1, **caractérisé par le fait qu'**il est prévu pour chaque élément d'actionnement (39, 40), un tube de rangement (61, 62) distinct qui, lorsque le store est enroulé, reçoit le tronçon non chargé de l'élément d'actionnement (39, 40).

21. Store à enrouleur pour vitre selon la revendication 20, **caractérisé par le fait que** le tube de rangement (61, 62) est fait d'un matériau souple.
